# EUROPÄISCHE PATENTSCHRIFT

(11) **EP 3 753 205 B1**
(45) Veröffentlichungstag und Bekanntmachung des Hinweises auf die Patenterteilung: **24.01.2024**
(21) Anmeldenummer: 19717442.8
(22) Anmeldetag: 03.04.2019
(51) Int. Cl.: H04L 43/0852, H04L 43/0888, H04L 43/20

(54) **DATENÜBERTRAGUNG IN ZEITSENSITIVEN DATENNETZEN**
DATA TRANSMISSION IN TIME-SENSITIVE DATA NETWORKS
TRANSMISSION DE DONNÉES DANS DES RÉSEAUX DE DONNÉES SENSIBLES AU TEMPS

(30) Priorität: 04.04.2018 DE 102018205013
(43) Veröffentlichungstag der Anmeldung: 23.12.2020
(73) Patentinhaber: Siemens Aktiengesellschaft, 80333 München (DE)
(72) Erfinder: HÖME, Stephan, 91126 Schwabach (DE); KIESSLING, Marcel, 91235 Velden (DE); NGUYEN, An Ninh, 90427 Nürnberg (DE); SCHMITT, Jürgen, 90768 Fürth (DE); VOLKMANN, Frank, 90475 Nürnberg (DE)
(74) Vertreter: Siemens Patent Attorneys
(86) Internationale Anmeldenummer: PCT/EP2019/058364
(87) Internationale Veröffentlichungsnummer: WO 2019/193031

(56) Entgegenhaltungen:
- WO-A1-2017/092879
- WO-A1-2018/024809
- US-A1- 2018 024 537

## Beschreibung

Die Erfindung betrifft eine Vorrichtung zur Übertragung von Daten in zeitsensitiven Netzwerken (Time-Sensitive Networking (TSN) - Netzwerke) und in Netzwerken mit garantierten Qualitätsparametern (Quality of Service (QoS) - Netzwerke) sowie ein Verfahren zum Betreiben eines Endgeräts.

Als Time-Sensitive Networking (TSN) wird eine Gruppe von Kommunikationsstandards bezeichnet, die durch die Standardisierungsorganisation IEEE 802.1 des Institute of Electrical and Electronics Engineers (IEEE) überwiegend für die Schicht 2, auch als Verbindungsschicht oder Data-Link Layer bezeichnet, des Open Systems Interconnection (OSI) Referenzmodells für Netzwerkprotokolle entwickelt wurde. Das OSI Referenzmodell umfasst sieben Schichten der Datenübertragung in folgender Zuordnung mit den jeweils auch im Deutschen gebräuchlichen englischen Bezeichnungen:

| | | |
|---|---|---|
| Schicht 7 | Anwendungsschicht | (Application Layer) |
| Schicht 6 | Darstellungsschicht | (Presentation Layer) |
| Schicht 5 | Sitzungsschicht | (Session Layer) |
| Schicht 4 | Transportschicht | (Transport Layer) |
| Schicht 3 | Vermittlungsschicht | (Network Layer) |
| Schicht 2 | Sicherungsschicht | (Data-Link Layer) |
| Schicht 1 | Bitübertragungsschicht | (Physical Layer) |

Das OSI Referenzmodell kann mit einem TCP/IP Protokollstapel (TCP/IP Stack) umgesetzt sein, bei dem die Vermittlungsschicht Daten nach dem Internet Protocol (IP) paketvermittelt überträgt, in der Transportschicht Datenpakete gemäß dem Transmission Control Protocol (TCP) zusammengestellt werden und bei dem sich eine Softwareanwendung oder Applikation über die Schichten 5 bis 7 erstrecken kann.

TSN Protokolle erweitern bekannte Mechanismen zur Datenübertragung nach dem OSI Referenzmodell beispielsweise um Funktionen zur Reservierung von Übertragungsbandbreite, zur Zeitsynchronisation oder zur Minimierung von Übertragungslatenzen zwischen den Endpunkten eines TSN Protokolls. Derartige Erweiterungen werden als Quality of Service (QoS) zusammengefasst.

Ohne QoS Erweiterungen kann das Zeitverhalten bei der Datenübertragung mittels einer Schichtenarchitektur, bei der die Sicherungsschicht entsprechend dem Ethernet-Protokoll implementiert ist, nicht zuverlässig vorhergesagt werden. Ebenso ist das Sendeverhalten von Applikationen, die Daten innerhalb einer oder mehrerer Schichten oberhalb der Schicht 4 (Transportschicht) in einer nach dem OSI Referenzmodell ohne QoS Erweiterungen implementierten Netzwerkarchitektur übertragen, nicht bekannt und nicht an die Parameter der Netzwerkarchitektur, beispielsweise an eine verfügbare Übertragungsbandbreite, anpassbar.

Eine aus dem Stand der Technik seit Langem bekannte Implementierung der Sicherungsschicht ist das Ethernet-Übertragungsprotokoll. Die Dienste des Ethernet-Übertragungsprotokolls werden für die darüber liegenden Schichten 3 bis 7 mittels einer Ethernet-Schnittstelle verfügbar gemacht.

Zur Umsetzung einer zeitsensitiven Netzwerkübertragung (TSN) kann das Ethernet-Übertragungsprotokoll mit Erweiterungen versehen werden. Derartige Erweiterungen werden für höhere Schichten des OSI Referenzmodells über TSN-kompatible Ethernet-Schnittstellen bereitgestellt.

Aus dem Stand der Technik sind TSN-kompatible Ethernet-Schnittstellen bekannt, die in der Schicht 2 des OSI Referenzmodells angeordnet sind und die zusätzlich zu Funktionen des Ethernet Übertragungsprotokolls Mittel zur Steuerung des Zeitverhaltens der Übertragung von Datenpaketen bereitstellen. Beispielsweise können Streamklassen zur zeitlichen Strukturierung, Priorisierung und zur Garantie von Latenzzeiten innerhalb eines TSN Netzwerks durch Parameter bestimmt werden. Ferner können zulässige Sendezeitpunkte für eine Applikation als Sendeoffsets parametrisiert werden.

Aus der Druckschrift WO 2018/024809 A1 ist bereits ein ein im industriellen Umfeld eingesetztes Kommunikations-Netz SDN (Software-Defined Network) beschrieben, welches eine Control Plane und eine Data Plane aufweist. Ein Communication Backbone wird vorgeschlagen, der eine Industrial Ethernet Infrastruktur anbietet, die Vermittlung zwischen den einzelnen Topologien basierend auf verschiedenen Standards inclusive TSN ermöglicht.

Aus Chauvet et. Al. - Software Defined Automation System and Architecture, US 2018/0024537 A1, ist ein Kommunikations-Backbone unter Verwendung von beispielsweise Time Sensitive Networking (TSN) bekannt. Diese durch Ethernet ermöglichte Konnektivität verbessert die Zugänglichkeit von Automatisierungsgeräten und -daten erheblich und trägt dazu bei, die richtigen Informationen zur richtigen Zeit an die richtige Stelle zu liefern. Eine im Folgenden als Legacy-Applikation bezeichnete Applikation, die für den Zugriff auf eine nicht TSN-kompatible Ethernet-Schnittstelle ausgelegt war, kann zwar auf die von einer TSN-kompatiblen Ethernet-Schnittstelle angebotenen Dienste des Ethernet Übertragungsprotokolls zugreifen, nicht jedoch auf die zusätzlich angebotenen Mittel zur Steuerung des Zeitverhaltens der Übertragung. Insbesondere kann das Sendeverhalten einer solchen Applikation nicht abhängig von der Übertragungsbandbreite und/oder abhängig von zeitlichen Übertragungsparametern, beispielsweise zugeordneten Sendeintervallen, gesteuert werden. Eine derartige Steuerung ist jedoch für den Betrieb eines zeitsensitiven Netzwerks aufgrund der beschränkten Gesamtübertragungsbandbreite erforderlich.

Somit müssen nach dem Stand der Technik Applikationen, um TSN Erweiterungen, oder allgemein QoS Erweiterungen, die durch eine TSN-kompatible Ethernet-Schnittstelle bereitgestellt werden, die spezifische Daten- und/oder Programmierschnittstelle einer solchen TSN-kompatiblen Ethernet-Schnittstelle verwenden. Andernfalls ist die Zusicherung von zeitlichen Übertragungsgarantien für eine solche Legacy-Applikation auch innerhalb eines TSN Netzwerks nicht möglich.

Eine für eine Ethernet-Schnittstelle ohne TSN Erweiterungen vorgesehene Applikation muss daher angepasst, im Regelfall mindestens neu kompiliert und/oder mit Programmierbibliotheken verbunden (gelinkt) werden.

Ferner sind aus dem Stand der Technik virtuelle lokale Netzwerke (virtual local area networks, VLANs) bekannt, mit welchen innerhalb eines einzigen physikalischen (das heißt: über eine gemeinsame Bitübertragungsschicht des OSI Referenzmodells verbundenen) Netzwerks räumlich und/oder topologisch Teilnetzwerke derart abgetrennt werden können, dass die Übertragung von Daten auf jeweils ein Teilnetzwerk (VLAN) beschränkt werden kann. Derartige VLANs sind in dem Standard IEEE 802.1Q-2011 IEEE Standard for Local and metropolitan area networks--Bridges and Bridged Networks beschrieben.

Der Zugriff auf ein solches VLAN erfolgt durch ein virtuelles Netzwerkinterface, beispielsweise durch eine virtuelle Ethernet-Schnittstelle. Eine virtuelle Ethernet-Schnittstelle stellt alle Funktionen einer herkömmlichen, nicht TSN-kompatiblen Ethernet-Schnittstelle bereit, wird jedoch, üblicherweise durch Betriebssystem-Mittel, unabhängig von einem physikalischen Ethernet-Adapter implementiert. Insbesondere können mehrere virtuelle Ethernet-Schnittstellen unabhängig voneinander parametrisiert und getrennten VLANs zugeordnet werden, jedoch auf einen gemeinsamen physikalischen Ethernet-Adapter zugreifen.

Die Bereitstellung von zeitlichen und/oder QoS Übertragungsgarantien ist durch derartige virtuelle Netzwerkschnittstellen nicht vorgesehen.

Der Erfindung liegt die Aufgabe zugrunde, eine Übertragungsvorrichtung anzugeben, mit der Applikationen leichter und besser Daten über zeitsensitive Netzwerke austauschen können. Ferner liegt der Erfindung die Aufgabe zugrunde, ein Endgerät mit einer solchen Übertragungsvorrichtung sowie ein Verfahren zum Betreiben einer solchen Übertragungsvorrichtung anzugeben.

Die Aufgabe wird hinsichtlich der Übertragungsvorrichtung erfindungsgemäß durch eine Übertragungsvorrichtung mit den Merkmalen des Anspruchs 1 gelöst. Hinsichtlich des Verfahrens zum Betreiben der Übertragungsvorrichtung wird die Aufgabe erfindungsgemäß durch ein Verfahren mit den Merkmalen des Anspruchs 4 gelöst.

Vorteilhafte Ausgestaltungen der Erfindung sind Gegenstand der Unteransprüche.

Eine Übertragungsvorrichtung, die zur Übertragung von Daten mit einem Transmission Control Protocol / Internet Protocol (TCP/IP) Protokollstapel in einem zeitsensitiven Netzwerk (TSN) eingerichtet ist, umfasst mindestens eine virtuelle Ethernet-Schnittstelle, die zur Übertragung von Daten in einer physikalischen Schicht des TCP/IP Stapels über einen physikalischen Ethernet-Adapter nach einem Protokoll eingerichtet ist, mit dem zeitliche Parameter der Datenübertragung garantiert werden können (Time-Sensitive Network, TSN) und/oder mit dem andere Qualitätsparameter der Datenübertragung garantiert werden können (Quality-of-Service, QoS). Eine solche Datenübertragung wird als TSN-konforme Datenübertragung oder als TSN-konformer Datenstrom bezeichnet.

Erfindungsgemäß ist diese virtuelle Ethernet-Schnittstelle zudem zum Datenaustausch mit einer Applikation über die IP Schicht des TCP/IP-Protokollstapels derart eingerichtet, dass mit einer Applikation über die IP Schicht keine Steuerdaten oder Parameter ausgetauscht werden, welche spezifisch für die Datenübertragung in einem TSN Netzwerk oder für eine QoS Datenübertragung sind. Gegenüber einer Applikation verhält sich und erscheint eine solche virtuelle Ethernet-Schnittstelle somit als Ethernet-Schnittstelle ohne TSN (oder QoS) Funktionen.

Eine solche virtuelle Ethernet-Schnittstelle wird im Folgenden als TSN-konforme virtuelle Ethernet-Schnittstelle bezeichnet.

Die Übertragungsvorrichtung umfasst ferner mindestens eine TSN Steuereinheit, wobei jeder TSN-konformen virtuellen Ethernet-Schnittstelle eine solche TSN Steuereinheit zugeordnet ist. Eine TSN Steuereinheit ist derart eingerichtet und mit der zugeordneten TSN-konformen virtuellen Ethernet-Schnittstelle verbunden, dass mittels der TSN Steuereinheit die TSN-konforme virtuelle Ethernet-Schnittstelle konfigurierbar und/oder parametrisierbar ist. Beispielsweise können Streamklassen für einen über die TSN-konforme virtuelle Schnittstelle übertragenen Datenstrom konfiguriert werden, welche die zeitliche Strukturierung, die Priorisierung oder garantierte Latenzzeiten innerhalb des TSN Netzwerks bestimmen. Zusätzlich oder alternativ können zulässige Sendezeitpunkte als Sendeoffsets parametrisiert werden.

Eine TSN Steuereinheit kann beispielsweise mit Betriebsmitteln eines Betriebssystems umgesetzt sein.

Ein Vorteil der beschriebenen Übertragungsvorrichtung mit einer solchen virtuellen TSN-konformen Ethernet-Schnittstelle besteht somit in der Möglichkeit, Legacy-Applikationen, die eine Übertragung von TSN und/oder QoS Parametern über die IP Schicht nicht unterstützen und die, beispielsweise aus technischen, rechtlichen, regulatorischen und/oder Aufwandsgründen, nicht an die Übertragung solcher Parameter über die IP Schicht anpassbar sind, unverändert, flexibel und mit geringem Integrationsaufwand in einem TSN Netzwerk zu betreiben.

In einer Ausführungsform der Erfindung weist die Übertragungsvorrichtung eine Mehrzahl von mittels jeweils einer zugeordneten TSN Steuereinheit unabhängig konfigurierbaren und/oder parametrisierbaren virtuellen TSN-konformen Ethernet-Schnittstellen auf. Jede dieser virtuellen TSN-konformen Ethernet-Schnittstellen ist über die IP Schicht mit jeweils mindestens einer Applikation verbindbar. Zudem sind mehrere dieser TSN-konformen virtuellen Ethernet-Schnittstellen zur TSN-konformen Datenübertragung in der physikalischen Schicht mit einem einzigen, gemeinsamen physikalischen Ethernet-Adapter verbindbar.

Ein Vorteil dieser Ausführungsform besteht darin, dass die Übertragungsbandbreite eines einzigen physikalischen Ethernet-Adapters durch eine Mehrzahl von Applikationen genutzt werden kann. Somit verringert sich der Aufwand für eine TSN-konforme Datenübertragung.

In einer Ausführungsform der Erfindung ist eine virtuelle TSN-konforme Ethernet-Schnittstelle mit einer Mehrzahl von Applikationen verbindbar ausgebildet. Ein Vorteil dieser Ausführungsform besteht darin, dass durch Konfiguration und/oder Parametrisierung einer einzigen virtuellen TSN-konformen Ethernet-Schnittstelle die TSN-konforme Datenübertragung einer Mehrzahl von Applikationen gesteuert werden kann. Somit verringert sich der Aufwand für die Einrichtung einer TSN-konformen Datenübertragung.

Ein Endgerät umfasst eine Recheneinheit und zur Umsetzung mindestens eines TCP/IP Protokollstapels eingerichtete Betriebsmittel, beispielsweise ein auf der Recheneinheit ausführbares Betriebssystem. Erfindungsgemäß umfasst das Endgerät ferner eine Übertragungsvorrichtung in einer der oben beschriebenen Ausführungsformen, wobei die Recheneinheit und die Betriebsmittel zur Ablaufsteuerung mindestens einer Applikation eingerichtet sind und wobei die Übertragungsvorrichtung mit der Applikation verbindbar und zum Austausch von Daten mit der Applikation über eine IP Schicht des mindestens einen TCP/IP Protokollstapels eingerichtet ist.

In vorteilhafter Weise kann ein solches Endgerät mittels der TSN Steuereinheit, beispielsweise mit Betriebssystemmitteln, für einen Einsatz in einem TSN-konformen Netzwerk oder in einem Einsatz in einem Netzwerk mit QoS Parametern eingerichtet werden, ohne dass hierzu Anpassungen an den auf dem Endgerät lauffähigen Applikationen erforderlich sind. Dadurch können Aufwände in der Entwicklung, Testung, Zulassung und Inverkehrbringung derartiger Endgeräte gespart und ein Entwicklungsrisiko verringert werden. Es ist auch möglich, ein Endgerät unter Einhaltung eventueller rechtlicher, vertraglicher oder regulatorischer Beschränkungen hinsichtlich einer oder mehrerer Applikationen an ein TSN-konformes Netzwerk anzupassen.

Bei einem Verfahren zum Betreiben eines solchen Endgeräts wird für jede Applikation ein Applikationsübertragungsbandbreitenbedarf ermittelt und jeder Applikation eine virtuelle TSN-konforme Ethernet-Schnittstelle zugeordnet. Mittels der TSN Steuereinheit wird die virtuelle TSN-konforme Ethernet-Schnittstelle zur Übertragung mindestens der Applikationsübertragungsbandbreite der zugeordneten Applikation konfiguriert und parametrisiert.

Ein Vorteil dieses Verfahrens besteht darin, dass Applikationen, die nicht für den Einsatz in einem TSN-Netzwerk oder in einem Netzwerk mit QoS Parametergarantien vorgesehen sind, ohne Änderung, insbesondere ohne Neukompilierung, in ein solches TSN- oder QoS-Netzwerk so integriert werden können, dass die netzwerkweiten Qualitäts- und Zeitgarantien eingehalten werden. Weitere Vorteile dieses Verfahrens ergeben sich aus den Vorteilen des damit betriebenen Endgeräts.

Bei einer Ausführungsform des Verfahrens wird eine Applikationsübertragungsbandbreite durch Shaping in mindestens einer virtuellen TSN-konformen Ethernet-Schnittstelle derart begrenzt, dass die Summe aller Applikationsübertragungsbandbreiten der dieser virtuellen TSN-konformen Ethernet-Schnittstelle zugeordneten Applikationen eine physikalisch verfügbare Übertragungsbandbreite nicht überschreitet. In vorteilhafter Weise ist es dadurch besonders einfach möglich, auch für nicht-kooperative Legacy-Anwendung die Einhaltung netzwerkweiter Qualitäts- und Zeitgarantien sicherzustellen.

Bei einer Ausführungsform des Verfahrens werden einer virtuellen TSN-konformen Ethernet-Schnittstelle mehrere Applikationen zugeordnet. Die entsprechend der Übertragungsbandbreite des zugeordneten physikalischen Ethernet-Adapters physikalisch verfügbare Übertragungsbandbreite wird statisch auf die zugeordneten Applikationsübertragungsbandbreiten aufgeteilt. Daraus ergibt sich eine Obergrenze für die Zahl der mit dieser virtuellen TSN-konformen Ethernet-Schnittstelle bedienbaren Applikationen. In vorteilhafter Weise kann so eine physikalische Übertragungsbandbreite für eine TSN-konforme Datenübertragung besonders effizient genutzt werden.

Bei einer Ausführungsform des Verfahrens werden einer virtuellen TSN-konformen Ethernet-Schnittstelle mehrere Applikationen zugeordnet und eine physikalisch verfügbare Übertragungsbandbreite dynamisch auf die zugeordneten Applikationen aufgeteilt. Diese Ausführungsform ist beispielsweise vorteilhaft, wenn mehrere Applikationen zeitlich schwankende einzelne Bandbreitenbedarfe aufweisen, die sich in der Summe jedoch zu einem näherungsweise konstanten gesamten Bandbreitenbedarf ergänzen. In vorteilhafter Weise kann so eine physikalische Übertragungsbandbreite für eine TSN-konforme Datenübertragung besonders effizient genutzt werden.

Bei einer Ausführungsform des Verfahrens werden Daten zwischen einer Applikation und der zugeordneten virtuellen TSN-konformen Ethernet-Schnittstelle nach dem Transmission Control Protocol (TCP) übertragen, wobei über mindestens einen Parameter des TCP Protokolls an die Applikation eine Angabe über die der Applikation zur Verfügung stehende Applikationsübertragungsbandbreite übermittelt wird. Beispielsweise kann eine solche Angabe über den TCP Parameter TCP Receive Window (RWin) an die Applikation übermittelt werden.

Ein Vorteil dieser Ausführungsform des Verfahrens besteht darin, dass eine Applikation ihr Sendeverhalten entsprechend der verfügbaren Applikationsübertragungsbandbreite ohne Nutzung TSN-spezifischer Mechanismen anpassen kann. Somit kann eine Applikation universeller entwickelt und genutzt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 schematisch einen TCP/IP Protokollstapel ohne QoS Erweiterungen nach dem Stand der Technik,
FIG 2 schematisch einen TCP/IP Protokollstapel mit einer TSN-konformen virtuellen Ethernet-Schnittstelle und
FIG 3 schematisch einen TCP/IP Protokollstapel mit zwei TSN-konformen virtuellen Ethernet-Schnittstellen.

Einander entsprechende Teile sind in allen Figuren mit den gleichen Bezugszeichen versehen.

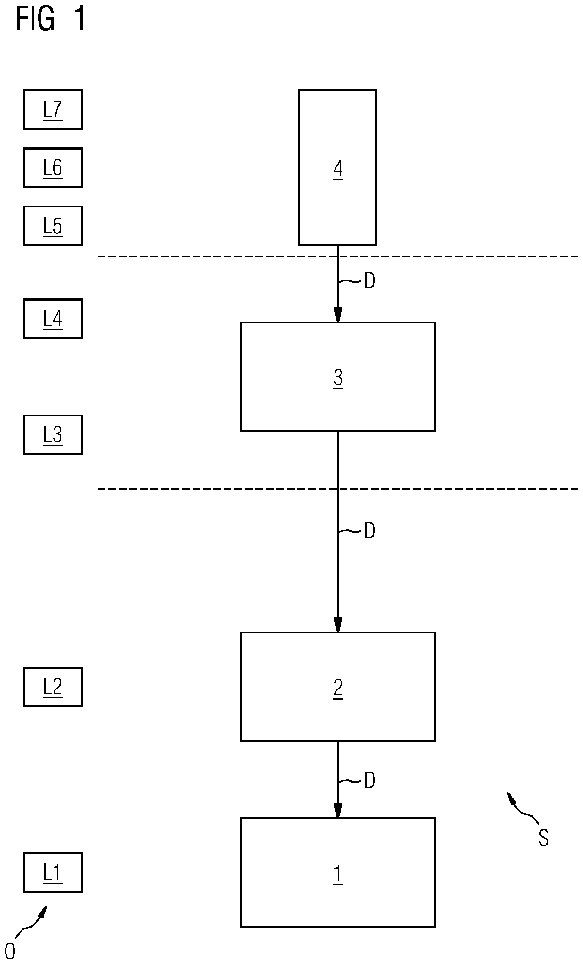

Figur 1 zeigt schematisch die Umsetzung des OSI Referenzmodells O durch einen TCP/IP Protokollstapel S auf einem nicht näher dargestellten Endgerät nach dem Stand der Technik.

Gemäß dem OSI Referenzmodell sind eine erste bis siebte OSI Übertragungsschicht L1 bis L7 übereinander angeordnet und Schichten 1 bis 4 eines TCP/IP Protokollstapels S zugeordnet, wobei eine physikalische Schicht 1 der ersten OSI Übertragungsschicht oder OSI-Bitübertragungsschicht L1 zugeordnet ist, eine Ethernet-Schicht 2 der zweiten OSI Übertragungsschicht oder OSI-Sicherungsschicht L2 zugeordnet ist, eine IP Schicht 3 der dritten OSI Übertragungsschicht oder OSI-Vermittlungsschicht L3 zugeordnet ist und sich eine Anwendungsschicht 4 über die fünfte bis siebte OSI Übertragungsschicht (OSI-Sitzungsschicht L5, OSI-Darstellungsschicht L6, OSI-Anwendungsschicht L7) erstreckt.

Die vierte OSI Übertragungsschicht oder OSI-Transportschicht L4 kann im TCP/IP Protokollstapel S durch eine nicht näher dargestellte Transportschicht umgesetzt sein.

Daten D werden jeweils zwischen vertikal angrenzenden Schichten 1 bis 4 übertragen.

Diese Daten D können Nutzdaten (pay load) umfassen, die horizontal innerhalb der jeweiligen Schicht 1 bis 4 zwischen verschiedenen Endgeräten übertragen werden, wobei jeweils eine Schicht 1 bis 4 eines empfangenden Endgeräts diejenigen Nutzdaten empfängt und verarbeitet, die von der dazu korrespondierenden, in der Nummerierung gleichlautenden Schicht 1 bis 4 eines sendenden Endgeräts bereitgestellt wurden.

Die Daten D können ferner Steuerdaten umfassen, mit denen das Übertragungsverhalten einer vertikal tiefer liegenden Schicht 1 bis 3 des TCP/IP Protokollstapel S beeinflusst werden kann.

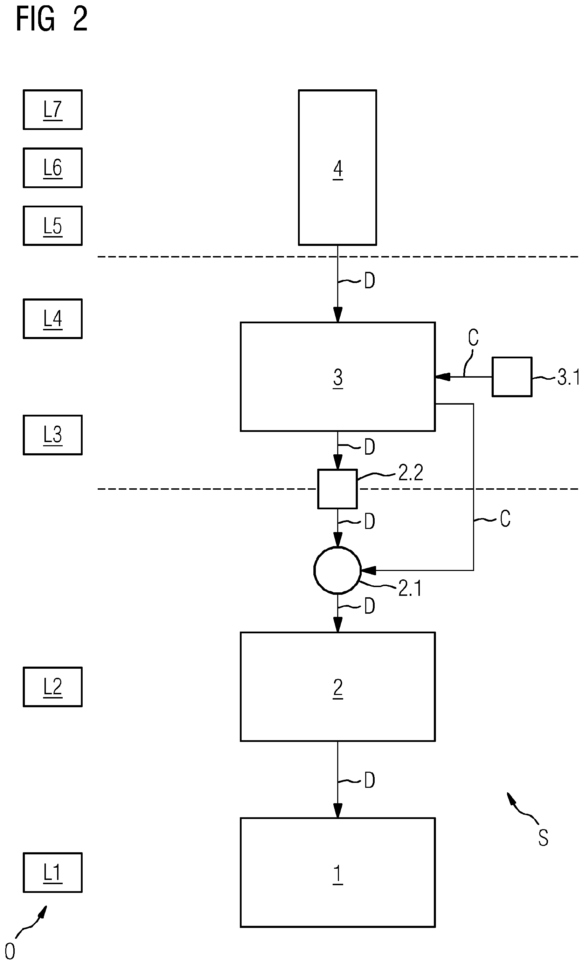

Die Wirkungsrichtung der Steuerdaten ist in Figur 2 durch Pfeile angezeigt. Die Übertragung von Nutzdaten erfolgt bidirektional zwischen vertikal benachbarten Schichten 1 bis 4.

Figur 2 zeigt schematisch die Umsetzung des OSI Referenzmodells O durch einen TCP/IP Protokollstapel S, bei dem gegenüber dem Stand der Technik zusätzlich eine TSN-konforme virtuelle Ethernet-Schnittstelle 2.2 zwischen der Ethernet-Schicht 2 und der IP-Schicht 3 angeordnet ist. Die virtuelle Ethernet-Schnittstelle 2.2 ist zur Erzeugung und Verarbeitung eines TSN-konformen Datenstroms 2.1 ausgebildet, der die Daten D an die / von der Ethernet-Schicht 2 überträgt.

Die virtuelle Ethernet-Schnittstelle 2.2 ist mittels TSN-Steuerdaten C konfigurierbar und parametrisierbar. Die TSN-Steuerdaten C umfassen Parameter zur Bestimmung von TSN Streamklassen, mit denen beispielsweise eine zeitliche Strukturierung, eine Priorisierung und/oder garantierte Latenzen für den TSN-konformen Datenstrom 2.1 festgelegt werden können. Die TSN-Steuerdaten C können zudem Sendeoffsets umfassen, welche mindestens einen Sendezeitpunkt für den TSN-konformen Datenstrom 2.1 festlegen.

Die Konfiguration und/oder Parametrisierung der virtuellen Ethernet-Schnittstelle 2.2 erfolgt mittels einer TSN Steuereinheit 3.1, welche die TSN-Steuerdaten C in die IP Schicht 3 des TCP/IP Protokollstapel S einspeist. Die Wirkungsrichtung der TSN-Steuerdaten C ist in Figur 2 durch Pfeile markiert. Es können jedoch, beispielsweise bei einem Handshake - Protokoll zur Übertragung der TSN-Steuerdaten C, auch Informationen entgegen der Pfeilrichtung übertragen werden.

Der gemäß Figur 2 um eine virtuelle TSN-konformen Ethernet-Schnittstelle 2.2 erweiterte TCP/IP Protokollstapel S ermöglicht es einer Legacy-Applikation, in der Anwendungsschicht 4 ohne Änderung über ein zeitsensitives TSN Netzwerk zu kommunizieren. Die Steuerung aller zeitkritischen Übertragungsparameter und QoS Qualitätsparameter erfolgt durch die von der Legacy-Applikation unabhängige TSN Steuereinheit 3.1.

Die gesamte TSN Kommunikation bleibt für die Legacy-Applikation transparent, da aus der Anwendungsschicht 4 heraus nur auf die gegenüber einer nicht TSN-konformen Übertragung unveränderte IP Schicht 3 zugegriffen wird. Die Auswahl der Netzwerkschnittstellen erfolgt über bekannte, gegenüber einem TCP/IP Protokollstapel aus dem Stand der Technik unveränderte Mechanismen, beispielsweise durch Festlegung des Routings über das Protokoll der IP Schicht 3 und/oder durch Festlegung der virtuellen Ethernet-Schnittstelle über das Protokoll der Ethernet-Schicht 2.

Beispielsweise kann eine notwendige Begrenzung der Übertragungsbandbreite der Legacy-Applikation durch Shaping in der virtuellen Ethernet-Schnittstelle 2.2 erfolgen, ohne dass dazu die Legacy-Applikation eine Information über die Bandbreitenobergrenze benötigt. Es ist jedoch möglich, über mit den Daten D übertragene Steuer- und Kontrollinformationen der Legacy-Applikation indirekt eine Information zur nutzbaren Übertragungsbandbreite zu übermitteln, beispielsweise über den Parameter der Fenstergröße (window size) bei einer Nutzung des TCP Protokolls in einer zur OSI-Transportschicht L4 korrespondierenden, nicht näher dargestellten Transportschicht.

Ein Vorteil des um eine virtuelle TSN-konforme Ethernet-Schnittstelle 2.2 erweiterten TCP/IP Protokollstapel S besteht somit in der Möglichkeit, Legacy-Applikationen, die beispielsweise aus technischen, rechtlichen, regulatorischen und/oder Aufwandsgründen nicht an eine TSN-konforme Datenübertragung in der IP Schicht 3 anpassbar sind, unverändert in einem TSN Netzwerk zu betreiben.

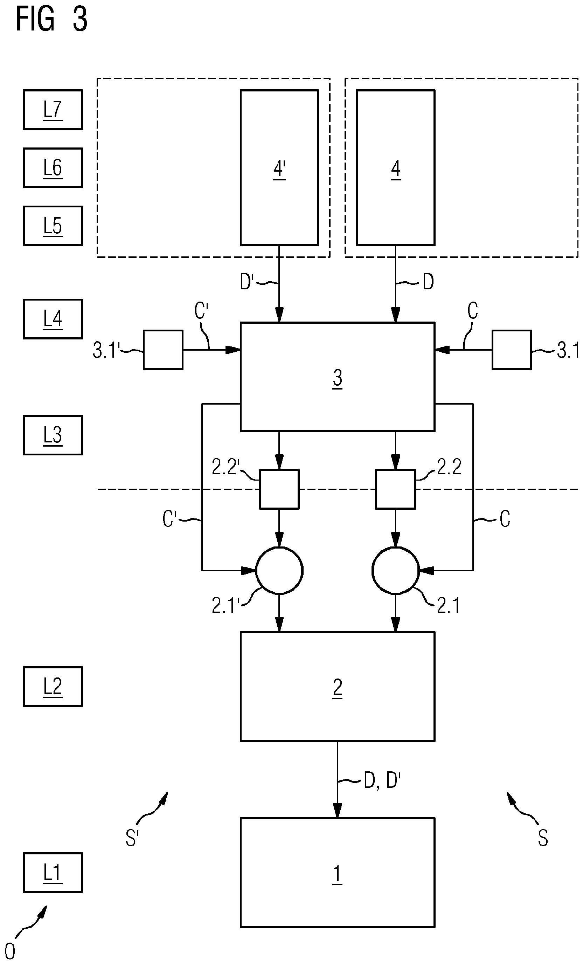

Figur 3 zeigt schematisch zwei Instanzen eines TCP/IP Protokollstapels S, S' in einem Ausführungsbeispiel mit zwei voneinander getrennten Legacy-Applikationen, die jeweils in einer Instanz der Anwendungsschicht 4, 4' ablaufen. Mit anderen Worten: zwei Programme laufen unabhängig voneinander auf einem Endgerät und tauschen untereinander oder mit weiteren Programmen auf dem gleichen oder einem anderen Endgerät Daten entlang der fünften bis siebten OSI Übertragungsschicht aus.

Die erste Instanz der Anwendungsschicht 4 überträgt erste Daten D an die / von der IP Schicht 3. Das Routing der IP Schicht 3 ist so konfiguriert, dass die ersten Daten D an die erste virtuelle Ethernet-Schnittstelle 2.2 geleitet werden. Die erste virtuelle Ethernet-Schnittstelle 2.2 ist zur Erzeugung und Verarbeitung eines ersten TSN-konformen Datenstroms 2.1 ausgebildet, der die ersten Daten D an die / von der Ethernet-Schicht 2 überträgt.

Die erste virtuelle Ethernet-Schnittstelle 2.2 ist mittels erster TSN-Steuerdaten C analog zu dem an Figur 2 bereits erklärten Verfahren konfigurierbar und parametrisierbar. Die Konfiguration und/oder Parametrisierung der ersten virtuellen Ethernet-Schnittstelle 2.2 erfolgt mittels einer ersten TSN Steuereinheit 3.1, welche die ersten TSN-Steuerdaten C in die IP Schicht 3 des TCP/IP Protokollstapel S einspeist.

Somit bilden die Schichten 1 bis 3, die erste Instanz der Anwendungsschicht 4, die erste virtuelle Ethernet-Schnittstelle 2.2 sowie die erste TSN Steuereinheit 3.1 für sich einen TCP/IP Protokollstapel S nach der in Figur 2 bereits beschriebenen Ausführungsform.

In analoger Weise bilden die Schichten 1 bis 3, die zweite Instanz der Anwendungsschicht 4`, eine zweite virtuelle Ethernet-Schnittstelle 2.2' sowie eine zweite TSN Steuereinheit 3.1` für sich einen zweiten TCP/IP Protokollstapel S` nach der in Figur 2 bereits beschriebenen Ausführungsform, wobei die zweite virtuelle Ethernet-Schnittstelle 2.2' zur Erzeugung und Verarbeitung eines zweiten TSN-konformen Datenstroms 2.1' ausgebildet und mittels zweiter TSN-Steuerdaten C` analog zu dem an Figur 2 bereits erklärten Verfahren konfigurierbar und parametrisierbar ist und die Konfiguration und/oder Parametrisierung der zweiten virtuellen Ethernet-Schnittstelle 2.2` mittels der zweiten TSN Steuereinheit 3.1`, welche die zweiten TSN-Steuerdaten C` in die IP Schicht 3 des TCP/IP Protokollstapel S` einspeist, erfolgt.

Beide Instanzen der Anwendungsschicht 4, 4` nutzen gemeinsam die physikalische Schicht 1, die Ethernet-Schicht 2 sowie die IP Schicht 3, greifen aber auf voneinander getrennte virtuelle Ethernet-Schnittstellen 2.2, 2.2' zu, die TSN-konform ausgebildet und über jeweils zugeordnete TSN Steuereinheiten 3.1, 3.1' konfigurierbar und parametrisierbar sind und mittels eines gemeinsamen, nicht näher dargestellten physikalischen Ethernet-Adapters auf die physikalische Schicht 1 zugreifen.

Somit ist es in diesem Ausführungsbeispiel möglich, jeder der in den Instanzen der Anwendungsschicht 4, 4` laufenden Legacy-Applikationen eine TSN konforme Übertragung zuzuordnen, indem jeder der virtuellen Ethernet-Schnittstellen 2.2, 2.2' derart konfiguriert und parametrisiert wird, dass die Summe der den virtuellen Ethernet-Schnittstellen 2.2, 2,2` zugewiesenen einzelnen Übertragungsbandbreiten höchstens so groß ist wie die insgesamt über die erste bis dritte Schicht 1 bis 3 übertragbare Bandbreite und dass zudem jeder virtuellen Ethernet-Schnittstelle 2.2, 2,2` eine einzelne Übertragungsbandbreite zugewiesen wird, die mindestens so groß ist wie der Bandbreitenbedarf der jeweiligen Instanz der Anwendungsschicht 4, 4' laufenden Legacy-Applikation.

Somit kann eine Mehrzahl von Legacy-Applikationen ohne Anpassung über ein zeitsensitives (TSN) Netzwerk kommunizieren und zeitliche Zusicherungen zum Übertragungsverhalten garantieren.

In einer Ausführungsform der Erfindung können weitere, in Figur 3 nicht dargestellte Legacy-Applikationen in weiteren Instanzen der Anwendungsschicht betrieben werden und gemeinsam einer TSN-konformen virtuellen Ethernet-Schnittstelle 2.2, 2.2` zugeordnet werden.

Dabei kann die dieser virtuellen Ethernet-Schnittstelle 2.2, 2.2` zugewiesene Übertragungsbandbreite zeitlich unveränderlich (statisch), beispielsweise in gleichen Anteilen, auf die zugeordneten Legacy-Applikationen aufgeteilt werden. Es ist aber auch möglich, dass die der jeweiligen virtuellen Ethernet-Schnittstelle 2.2, 2.2' zugewiesene Übertragungsbandbreite in zeitlich veränderlichen Anteilen (dynamisch) auf die zugeordneten Legacy-Applikationen aufgeteilt wird.

Ein Vorteil dieser Ausführungsform der Erfindung besteht darin, dass für das Betreiben einer vorgegebenen Anzahl von Applikationen eine geringere Zahl von virtuellen Ethernet-Schnittstellen 2.2, 2.2' erforderlich ist. Damit kann der Installations- und Wartungsaufwand verringert und der Datendurchsatz erhöht werden.

## Patentansprüche

1. Übertragungsvorrichtung mit einem TCP/IP Protokollstapel (S, S'), die zur Übertragung von Daten (D) in einem zeitsensitiven Netzwerk, Time-Sensitive Network TSN eingerichtet ist, wobei die Übertragungsvorrichtung mindestens eine TSN-konforme virtuelle Ethernet-Schnittstelle (2.2, 2.2`) und eine zugeordnete TSN Steuereinheit (3.1, 3.1`) umfasst, wobei die mindestens eine TSN-konforme virtuelle Ethernet-Schnittstelle (2.2, 2.2`) zum Senden und/oder Empfangen eines TSN-konformen Datenstroms (2.1, 2.1`) in einer physikalischen Schicht (1) des TCP/IP Protokollstapels (S, S') eingerichtet ist und wobei der TSN-konforme Datenstrom (2.1, 2.1') mittels der zugeordneten TSN Steuereinheit (3.1, 3.1`) konfigurierbar und/oder parametrisierbar ist,
wobei die Übertragungsvorrichtung mit einer Mehrzahl von mit jeweils einer zugeordneten TSN Steuereinheit (3.1, 3.1`) unabhängig konfigurierbaren und/oder parametrisierbaren virtuellen TSN-konformen Ethernet-Schnittstellen (2.2, 2.2'), die über eine Internet Protocol, IP Schicht des TCP/IP Protokollstapels (S, S') mit jeweils mindestens einer in einer Instanz der Anwendungsschicht (4, 4') laufenden Applikation verbunden sind und die gemeinsam über einen physikalischen Ethernet-Adapter mit der physikalischen Schicht (1) des TCP/IP Protokollstapels (S, S') verbunden sind, und
wobei die TSN Steuereinheit (3.1, 3.1`) derart eingerichtet und mit der zugeordneten TSN-konformen virtuellen Ethernet-Schnittstelle (2.2, 2.2') verbunden ist, dass für einen über die TSN-konforme virtuelle Schnittstelle übertragenen Datenstrom TSN Streamklassen konfigurierbar sind, welche die zeitliche Strukturierung, eine Priorisierung oder garantierte Latenzzeiten innerhalb des zeitsensitiven Netzwerks TSN bestimmen und
wobei eine Applikationsübertragungsbandbreite durch Shaping in einer virtuellen TSN-konformen Ethernet-Schnittstelle (2.2, 2.2`) derart begrenzt wird, dass die Summe aller Applikationsübertragungsbandbreiten der dieser virtuellen TSN-konformen Ethernet-Schnittstelle (2.2, 2.2`) zugeordneten Applikationen eine physikalisch verfügbare Übertragungsbandbreite nicht überschreitet und
über mit den Daten (D) übertragene Steuer- und Kontrollinformationen indirekt eine Information zur nutzbaren Übertragungsbandbreite an eine Legacy-Applikation übermittelt wird, wobei die Legacy-Applikation für den Zugriff auf eine nicht TSN-kompatible Ethernet-Schnittstelle ausgelegt ist, die zwar auf die von einer TSN-kompatiblen Ethernet-Schnittstelle angebotenen Dienste des Ethernet Übertragungsprotokolls zugreifen kann, nicht jedoch auf die zusätzlich angebotenen Mittel zur Steuerung des Zeitverhaltens der Übertragung.

2. Übertragungsvorrichtung nach Anspruch 1, **dadurch gekennzeichnet, dass** zulässige Sendezeitpunkte als Sendeoffsets parametrisiert werden.

3. Übertragungsvorrichtung nach einem der vorhergehenden Ansprüche, wobei eine virtuelle TSN-konforme Ethernet-Schnittstelle (2.2, 2.2`) mit einer Mehrzahl von Applikationen verbindbar ausgebildet ist.

4. Verfahren zum Betreiben eines Endgeräts, umfassend eine Recheneinheit und zur Umsetzung mindestens eines TCP/IP Protokollstapels (S, S') eingerichtete Betriebsmittel sowie eine Übertragungsvorrichtung nach einem der vorhergehenden Ansprüche,
wobei die Recheneinheit und die Betriebsmittel zur Ablaufsteuerung mindestens einer Applikation eingerichtet sind und wobei die Übertragungsvorrichtung mit der Applikation verbindbar und zum Austausch von Daten (D) mit der Applikation über eine Internet Protocol, IP Schicht des mindestens einen TCP/IP Protokollstapels (S, S') eingerichtet ist,
wobei für jede Applikation ein Applikationsübertragungsbandbreitenbedarf ermittelt wird, jeder Applikation eine virtuelle TSN-konforme Ethernet-Schnittstelle (2.2, 2.2`) zugeordnet und die virtuelle TSN-konforme Ethernet-Schnittstelle (2.2, 2.2`) mittels der TSN Steuereinheit (3.1, 3.1`) zur Übertragung mindestens der Applikationsübertragungsbandbreite der zugeordneten Applikation konfiguriert und parametrisiert wird,
wobei die TSN Steuereinheit (3.1, 3.1') derart eingerichtet ist, dass für einen über die TSN-konforme virtuelle Schnittstelle übertragenen Datenstrom Streamklassen konfiguriert werden, welche die zeitliche Strukturierung, die Priorisierung oder garantierte Latenzzeiten innerhalb des zeitsensitiven Netzwerks, Time-Sensitive Network TSN bestimmen und wobei eine Applikationsübertragungsbandbreite durch Shaping in einer virtuellen TSN-konformen Ethernet-Schnittstelle (2.2, 2.2`) derart begrenzt wird, dass die Summe aller Applikationsübertragungsbandbreiten der dieser virtuellen TSN-konformen Ethernet-Schnittstelle (2.2, 2.2`) zugeordneten Applikationen eine physikalisch verfügbare Übertragungsbandbreite nicht überschreitet und
über mit den Daten (D) übertragene Steuer- und Kontrollinformationen indirekt eine Information zur nutzbaren Übertragungsbandbreite an eine Legacy-Applikation übermittelbar ist, wobei die Legacy-Applikation für den Zugriff auf eine nicht TSN-kompatible Ethernet-Schnittstelle ausgelegt ist, die zwar auf die von einer TSN-kompatiblen Ethernet-Schnittstelle angebotenen Dienste des Ethernet Übertragungsprotokolls zugreifen kann, nicht jedoch auf die zusätzlich angebotenen Mittel zur Steuerung des Zeitverhaltens der Übertragung.

5. Verfahren nach Anspruch 4, wobei einer virtuellen TSN-konformen Ethernet-Schnittstelle (2.2, 2.2`) mehrere Applikationen zugeordnet werden und eine physikalisch verfügbare Übertragungsbandbreite statisch auf die zugeordneten Applikationsübertragungsbandbreiten aufgeteilt wird.

6. Verfahren nach Anspruch 4 oder 5, wobei einer virtuellen TSN-konformen Ethernet-Schnittstelle (2.2, 2.2`) mehrere Applikationen zugeordnet werden und eine physikalisch verfügbare Übertragungsbandbreite dynamisch auf die zugeordneten Applikationsübertragungsbandbreiten aufgeteilt wird.

7. Verfahren nach einem der Ansprüche 4 bis 6, wobei Daten (D) zwischen einer Applikation und der zugeordneten virtuellen TSN-konformen Ethernet-Schnittstelle (2.2, 2.2') nach dem Transmission Control Protocol TCP übertragen werden und wobei über mindestens einen Parameter des TCP Protokolls an die Applikation eine Angabe über die verfügbare Applikationsübertragungsbandbreite übermittelt wird.

## Claims

1. Transmission apparatus having a TCP/IP protocol stack (S, S'), which transmission apparatus is designed to transmit data (D) in a time-sensitive network, TSN, wherein the transmission apparatus comprises at least one TSN-compliant virtual Ethernet interface (2.2, 2.2') and an associated TSN control unit (3.1, 3.1'), wherein the at least one TSN-compliant virtual Ethernet interface (2.2, 2.2') is designed to send and/or receive a TSN-compliant data stream (2.1, 2.1') in a physical layer (1) of the TCP/IP protocol stack (S, S') and wherein the TSN-compliant data stream (2.1, 2.1') is configurable and/or parameterizable by means of the associated TSN control unit (3.1, 3.1'),
wherein the transmission apparatus is provided with a plurality of virtual TSN-compliant Ethernet interfaces (2.2, 2.2') that are configurable and/or parameterizable independently by means of a respective associated TSN control unit (3.1, 3.1'), that are connected to at least one respective application running in an instance of the application layer (4, 4') via an Internet Protocol, IP, layer of the TCP/IP protocol stack (S, S') and that are connected to the physical layer (1) of the TCP/IP protocol stack (S, S') jointly via a physical Ethernet adapter, and
wherein the TSN control unit (3.1, 3.1') is designed, and connected to the associated TSN-compliant virtual Ethernet interface (2.2, 2.2'), such that TSN stream classes for a data stream transmitted via the TSN-compliant virtual interface are configurable, which determine the temporal structuring, a prioritization or guaranteed latencies within the time-sensitive network TSN, and
wherein an application transmission bandwidth is limited by shaping in a virtual TSN-compliant Ethernet interface (2.2, 2.2') such that the sum of all application transmission bandwidths of the applications associated with this virtual TSN-compliant Ethernet interface (2.2, 2.2') does not exceed a physically available transmission bandwidth and control and monitoring information transmitted with the data (D) is used to indirectly convey information concerning the usable transmission bandwidth to a legacy application, the legacy application being designed for accessing a non-TSN-compatible Ethernet interface that, although able to access the services of the Ethernet transmission protocol that are provided by a TSN-compatible Ethernet interface, cannot access the additionally provided means for controlling the timing response of the transmission.

2. Transmission apparatus according to Claim 1, **characterized in that** admissible transmission times are parameterized as transmission offsets.

3. Transmission apparatus according to either of the preceding claims, wherein a virtual TSN-compliant Ethernet interface (2.2, 2.2') is in a form connectable to a plurality of applications.

4. Method for operating a terminal, comprising a computing unit and resources designed to implement at least one TCP/IP protocol stack (S, S'), and a transmission apparatus according to one of the preceding claims,
wherein the computing unit and the resources are designed for flow control for at least one application and wherein the transmission apparatus is connectable to the application and designed to interchange data (D) with the application via an Internet Protocol, IP, layer of the at least one TCP/IP protocol stack (S, S'),
wherein an application transmission bandwidth requirement is ascertained for each application, each application is assigned a virtual TSN-compliant Ethernet interface (2.2, 2.2') and the virtual TSN-compliant Ethernet interface (2.2, 2.2') is configured and parameterized by means of the TSN control unit (3.1 3.1') to transmit at least the application transmission bandwidth of the associated application,
wherein the TSN control unit (3.1, 3.1') is designed such that stream classes for a data stream transmitted via the TSN-compliant virtual interface are configured, which determine the temporal structuring, the prioritization or guaranteed latencies within the time-sensitive network, TSN, and wherein an application transmission bandwidth is limited by shaping in a virtual TSN-compliant Ethernet interface (2.2, 2.2') such that the sum of all application transmission bandwidths of the applications associated with this virtual TSN-compliant Ethernet interface (2.2, 2.2') does not exceed a physically available transmission bandwidth and
control and monitoring information transmitted with the data (D) is able to be used to indirectly convey information concerning the usable transmission bandwidth to a legacy application, the legacy application being designed for accessing a non-TSN-compatible Ethernet interface that, although able to access the services of the Ethernet transmission protocol that are provided by a TSN-compatible Ethernet interface, cannot access the additionally provided means for controlling the timing response of the transmission.

5. Method according to Claim 4, wherein a virtual TSN-compliant Ethernet interface (2.2, 2.2') is assigned multiple applications and a physically available transmission bandwidth is split over the associated application transmission bandwidths statically.

6. Method according to Claim 4 or 5, wherein a virtual TSN-compliant Ethernet interface (2.2, 2.2') is assigned multiple applications and a physically available transmission bandwidth is split over the associated application transmission bandwidths dynamically.

7. Method according to one of Claims 4 to 6, wherein data (D) are transmitted between an application and the associated virtual TSN-compliant Ethernet interface (2.2, 2.2') in accordance with the Transmission Control Protocol TCP and wherein at least one parameter of the TCP protocol is used to convey to the application an indication of the available application transmission bandwidth.

## Revendications

1. Dispositif de transmission avec une pile de protocole TCP/IP (S, S'), qui est conçu pour la transmission de données (D) dans un réseau sensible au temps, « Time Sensitive Network » TSN, dans lequel le dispositif de transmission comprend au moins une interface Ethernet virtuelle conforme au TSN (2.2, 2.2') et une unité de commande TSN (3.1, 3.1') correspondante, dans lequel l'au moins une interface Ethernet virtuelle conforme au TSN (2.2, 2.2') est conçue pour l'émission et/ou la réception d'un flux de données conforme au TSN (2.1, 2.1') dans une couche physique (1) de la pile de protocole TCP/IP (S, S') et dans lequel le flux de données conforme au TSN (2.1, 2.1') peut être configuré et/ou paramétré au moyen de l'unité de commande TSN (3.1, 3.1') correspondante,
dans lequel le dispositif de transmission est relié avec une pluralité d'interfaces Ethernet virtuelles conformes au TSN (2.2, 2.2'), pouvant être configurées et/ou paramétrées chacune indépendamment avec une unité de commande TSN (3.1, 3.1') correspondante, qui sont reliées chacune, par l'intermédiaire d'une couche de protocole Internet IP de la pile de protocole TCP/IP (S, S'), avec au moins une application s'exécutant dans une instance de la couche d'application (4, 4') et qui sont reliées ensemble, par l'intermédiaire d'un adaptateur Ethernet physique, avec la couche physique (1) de la pile de protocole TCP/IP (S, S') et
dans lequel l'unité de commande TSN (3.1, 3.1') est conçue et reliée à l'interface Ethernet virtuelle conforme au TSN associée (2.2, 2.2') de sorte que, pour un flux de données transmis par l'intermédiaire de l'interface virtuelle conforme au TSN, des classes de flux TSN peuvent être configurées, qui déterminent la structuration temporelle, une priorisation ou des temps de latence garantis à l'intérieur du réseau sensible au temps TSN et
dans lequel une bande passante de transmission d'application est limitée par la mise en forme dans une interface Ethernet virtuelle conforme au TSN (2.2, 2.2'), de sorte que la somme de toutes les bandes passantes de transmission d'applications des applications correspondant à cette interface Ethernet virtuelle conforme au TSN (2.2, 2.2') ne dépasse pas une bande passante de transmission physiquement disponible et, par l'intermédiaire d'informations de commande et de contrôle, transmises avec les données (D), une information concernant la bande passante de transmission utile est transmise indirectement à une application standard,
dans lequel l'application standard est conçue pour accéder à une interface Ethernet non compatible avec le TSN, qui peut accéder aux services du protocole de transmission Ethernet proposés par une interface Ethernet compatible avec le TSN, mais pas aux moyens de commande du comportement de la transmission en fonction du temps, proposés en supplément.

2. Dispositif de transmission selon la revendication 1, **caractérisé en ce que** des moments d'émission admissibles sont paramétrés en tant qu'offsets d'émission.

3. Dispositif de transmission selon l'une des revendications précédentes, dans lequel une interface Ethernet virtuelle conforme au TSN (2.2, 2.2') est conçue de façon à pouvoir être reliée avec une pluralité d'applications.

4. Procédé de fonctionnement d'un terminal, comprenant une unité de calcul et des équipements conçus pour la mise en œuvre d'au moins une pile de protocole TCP/IP (S, S') ainsi qu'un dispositif de transmission selon l'une des revendications précédentes,
dans lequel l'unité de calcul et les équipements sont conçus pour le contrôle des processus d'au moins une application et dans lequel le dispositif de transmission peut être relié avec l'application et est conçu pour l'échange de données (D) avec l'application par l'intermédiaire d'une couche de protocole Internet IP de l'au moins une pile de protocole TCP/IP (S, S'),
dans lequel, pour chaque application, un besoin en bande passante de transmission d'application est déterminé, à chaque application est attribuée une interface Ethernet virtuelle conforme au TSN (2.2, 2.2') et l'interface Ethernet virtuelle conforme au TSN (2.2, 2.2') est configurée et paramétrée, au moyen de l'unité de commande TSN (3.1, 3.1'), pour la transmission d'au moins la bande passante de transmission d'application de l'application correspondante,
dans lequel l'unité de commande TSN (3.1, 3.1') est conçue de sorte que, pour un flux de données transmis par l'intermédiaire de l'interface virtuelle conforme au TSN, des classes de flux sont configurées, qui déterminent la structuration temporelle, la priorisation ou des temps de latence garantis à l'intérieur du réseau sensible au temps, Time-Sensitive Network TSN, et dans lequel une bande passante de transmission d'application est limitée par la mise en forme dans une interface Ethernet virtuelle conforme au TSN (2.2, 2.2'), de sorte que la somme de toutes les bandes passantes de transmission d'applications des applications correspondant à cette interface Ethernet virtuelle conforme au TSN (2.2, 2.2') ne dépasse pas une bande passante de transmission physiquement disponible et, par l'intermédiaire d'informations de commande et de contrôle, transmises avec les données (D), une information concernant la bande passante de transmission utile est transmise indirectement à une application standard, dans lequel l'application standard est conçue pour accéder à une interface Ethernet non compatible avec le TSN, qui peut accéder aux services du protocole de transmission Ethernet proposés par une interface Ethernet compatible avec le TSN, mais pas aux moyens de commande du comportement de la transmission en fonction du temps, proposés en supplément.

5. Procédé selon la revendication 4, dans lequel plusieurs applications sont attribuées à une interface Ethernet virtuelle conforme au TSN (2.2, 2.2') et une bande passante de transmission physiquement disponible est répartie de manière statique sur les bandes passantes d'applications correspondantes.

6. Procédé selon la revendication 4 ou 5, dans lequel plusieurs applications sont attribuées à une interface Ethernet virtuelle conforme au TSN (2.2, 2.2') et une bande passante de transmission physiquement disponible est répartie de manière dynamique sur les bandes passantes d'applications correspondantes.

7. Procédé selon l'une des revendications 4 à 6, dans lequel des données (D) sont transmises entre une application et l'interface Ethernet virtuelle conforme au TSN (2.2, 2.2') associée selon le Transmission Control Protocol TCP et dans lequel, par l'intermédiaire d'au moins un paramètre du protocole TCP, une information concernant la bande passante d'application disponible est transmise à l'application.
